# EUROPEAN PATENT SPECIFICATION

(11) **EP 0 926 618 B1**
(45) Date of publication and mention of the grant of the patent: **10.05.2006**
(21) Application number: 98403251.6
(22) Date of filing: 22.12.1998
(51) Int. Cl.: G06K 7/00

(54) **Process of manufacturing a miniaturized electrical switch, integrated into a connector, for detecting the presence of a smart card.**
Herstellungsverfahren eines in einem Verbinder integrierten, miniaturisierten elektrischen Schalters zur Erkennung der Anwesenheit einer Smartkarte
Procédé de fabrication d'un interrupteur électrique miniaturisé, intégré à un connecteur, pour la détection de présence d'une carte à puce

(30) Priority: 26.12.1997 FR 9716564
(43) Date of publication of application: 30.06.1999
(73) Proprietor: ITT MANUFACTURING ENTERPRISES, INC., Wilmington, Delaware 19801 (US)
(72) Inventor: Bricaud, Hervé, 39100 Dole (FR); Valcher, Fabrice, 39500 Damparis (FR)
(74) Representative: Kohn, Philippe

(56) References cited:
- WO-A-95/33244
- FR-A- 2 665 027

## Description

The present invention relates to a process of manufacturing an electrical switch, built into an electrical connector, for detecting the presence of a smart card, also called a contact-type integrated-circuit card, in a read/write apparatus. Document FR-A-2.665.027 illustrates an example of such a built-in switch.

The invention relates particularly to a process of manufacturing a switch of the type described and illustrated in document WO-A-95/33244.

The object of the invention is to provide a process of manufacturing a switch whose total height, especially of its active part providing the switching function, is very much smaller compared with the state of the art and has very high tripping reliability and precision, in the context of mass production.

The invention relates more particularly to a process of manufacturing an electrical switch according to the preamble of claim 1.

In the known designs of switches with a tactile effect, for most applications the actuating device is generally a vertical pusher and the precision over the actuating travel is of no importance.

When the switch is built into a smart-card connector and when the actuating device includes an elastically deformable control blade, a first end of which is embedded in a cover of the switch belonging to the connector and the second end of which engages with the tripping device and includes an actuating lever, made in one piece with the control blade, which acts on the control blade and which is capable of pivoting about an axis parallel to the plane of the card in response to an actuating force which is applied to it by the card, the tolerances and the precision in the tripping travel of the switch must, on the contrary, meet very strict requirements. This is because, given the variations in the guiding means and/or in the positioning of the smart card with respect to the connector, especially in the vertical direction, it is necessary to guarantee that the switch is tripped whatever the height of the card with respect to the upper face of the connector over a 0.45 mm range.

In addition, it is desirable for the total height of the switch and of the connector to be at most equal to 1.25 mm, that is to say less than the maximum height of the other components which are provided on the printed-circuit board on which the connector with its switch is mounted.

To this end, the invention provides a process of manufacturing an electrical switch, built into an electrical connector of the aforementioned type, characterized in that the lateral fixed contact and the central fixed contact are produced by cutting out two longitudinal strips from the same sheet of conducting material, the lower faces of which two longitudinal strips being coplanar, in that the middle part of the central contact strip, which has the point-like central fixed contact, is bent vertically downwards in order to offset the central fixed contact vertically downwards with respect to the lateral fixed contact, and in that the free connection ends are produced by bending after the support of insulating material has been overmoulded.

According to other characteristics of the invention:
- the thickness of the lateral contact strip and the central contact strip is equal to 0.17 mm and the vertical offset between the lateral contact and the central contact is equal to 0.1 mm;
- the height between the plane lower face of the insulating support and the top point of the lateral contact is equal to 0.4 mm;
- at rest, the height of the tripping device is equal to 0.2 mm;
- the tripping device is a dome in the form of a truncated pyramid with a rectangular outline, the largest dimension of which is oriented transversely with respect to the longitudinal axis of the switch;
- the upper face of the switch unit has a cavity into which part of the actuating lever is retracted in the working position;
- the cavities formed in the upper face of the insulating support are adjacent and are open in a part closed by an adhesive sealing film;
- the cover has an upper wall which delimits an internal cavity having a rear part, in which the switch unit is fastened by crimping the fastening studs which extend vertically through the holes in the insulating support, and having a front part adjacent to the rear part in which a heel for embedding the rear end of the actuating device is fastened by crimping the studs which extend vertically through the holes in the heel, from which the actuating device extends longitudinally from the rear to the front above the upper face of the switch unit;
- the cover is a part of an insulating support carrying the fixed contacts of an electrical connector for connecting a smart card to a read/write apparatus;
- the two connection outputs of the switch are parallel to the connection ends of the contact blades of the connector and are spaced apart transversely by a spacing equal to the transverse spacing between the connection ends of the contact blades, and one of the connection ends of the switch is spaced transversely by a spacing from the connection end of the adjacent contact blade;
- the free end of the actuating lever extends above the said one connection end of the switch and the actuating device is made from a conductive material and includes a connection tab which is aligned with the said end and is longitudinally opposed so that the actuating device constitutes an additional contact blade of the connector.

Other characteristics and advantages of the invention will appear on reading the following detailed description, for the understanding of which reference will be made to the appended drawings, in which:
- Figure 1 is an isometric perspective top view of the front three-quarters of one embodiment of a switch manufactured according to the teachings of the invention;
- Figure 2 is an isometric perspective bottom view of the switch in Figure 1;
- Figure 3 is an isometric perspective view in which the three main components of the switch in Figures 1 and 2 are illustrated in an exploded manner;
- Figure 4 is an isometric perspective top view of the cover of the switch illustrated in Figures 1 and 3;
- Figure 5 is an isometric perspective bottom view of the cover in Figure 4;
- Figure 6 is an isometric perspective top view on a larger scale of the actuating device of the switch;
- Figure 7 is an isometric perspective bottom view of the actuating device in Figure 6;
- Figure 8 is an isometric perspective top view on a larger scale of the switch unit of the switch;
- Figure 9 is an isometric perspective bottom view of the switch unit;
- Figure 10 is a view similar to that in Figure 8 in which the film for the protection and sealed closure of the housing which receives the tripping device of the switch has been removed;
- Figure 11 is a view similar to that in Figure 10, in which the tripping device has been removed;
- Figure 12 is an isometric perspective view of the tripping device of the switch;
- Figure 13 is an isometric perspective front three-quarter top view which illustrates, on a larger scale, the two fixed contacts of the switch unit;
- Figure 13A is a cross-sectional view on the line 13A-13A of Figure 13;
- Figure 13B is a cross-sectional view on the line 13B-13B of Figure 13;
- Figure 14 is an isometric perspective bottom view of the two fixed contacts in Figure 13;
- Figure 15 is a view, on a larger scale and in longitudinal section, of the switch manufactured according to the invention on a line passing through the longitudinal axis of the actuating lever of the actuating device of the switch and in which the switch is illustrated in the rest position;
- Figure 16 is a view similar to that in Figure 15 in which the switch is illustrated in the working position;
- Figure 17 is a view on a larger scale of the switch taken in longitudinal section on a line passing through the longitudinal mid-axis of the control blade of the actuating device of the switch and in which view the latter is illustrated in the rest position;
- Figure 18 is a view similar to that in Figure 17, in which the switch is illustrated in the working position;
- Figure 19 is a bottom view on a larger scale of an alternative embodiment of a switch manufactured according to the teachings of the invention, which differs from the embodiment shown in the previous figures by the orientation of its output or connection tabs;
- Figure 20 is a sectional view on the line 20-20 of Figure 19;
- Figures 21 and 22 are views similar to those in Figures 15 and 16 which illustrate an alternative embodiment of the switch described previously, which here is a switch of the type which is normally closed in the rest position and open in the working position;
- Figure 23 is a top view illustrating the overmoulding of the insulating body of the switch unit around its fixed contacts;
- Figures 24 to 27 are sectional views on the lines 24-24 to 27-27 of Figure 23;
- Figure 28 is a top view which illustrates an example of a switch manufactured according to the invention built into a very small compact connector;
- Figure 29 is a perspective view of the connector in Figure 28;
- Figure 30 is a bottom view of the connector in Figure 28; and
- Figure 31 is a view similar to that in Figure 30 in which the switch unit has not been shown.

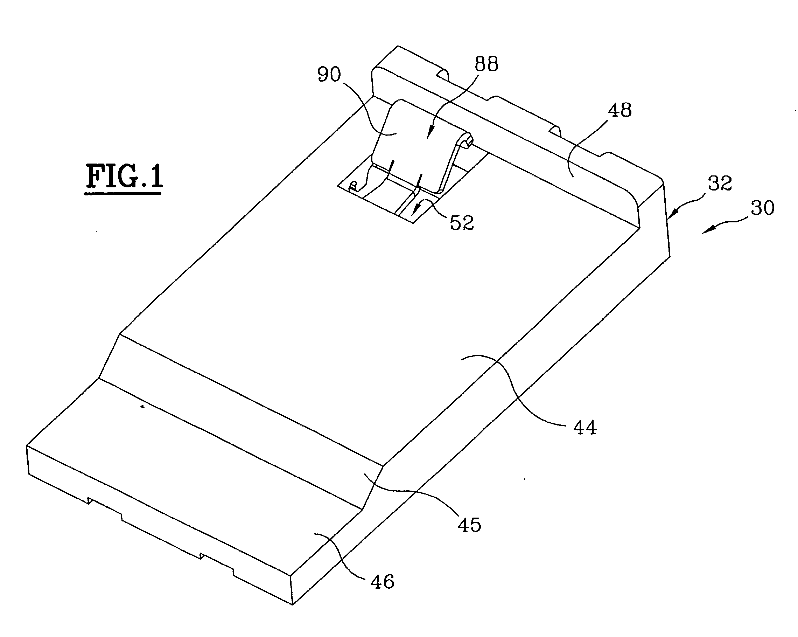

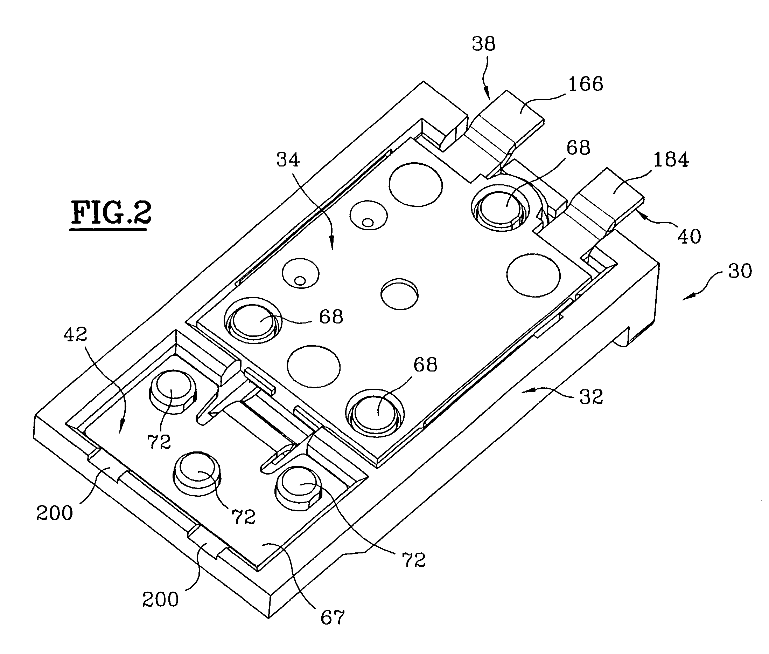

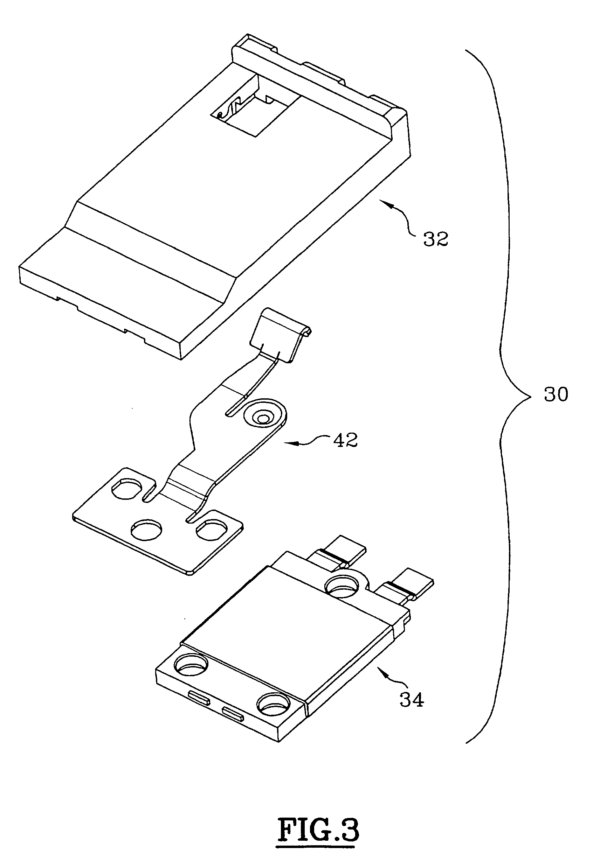

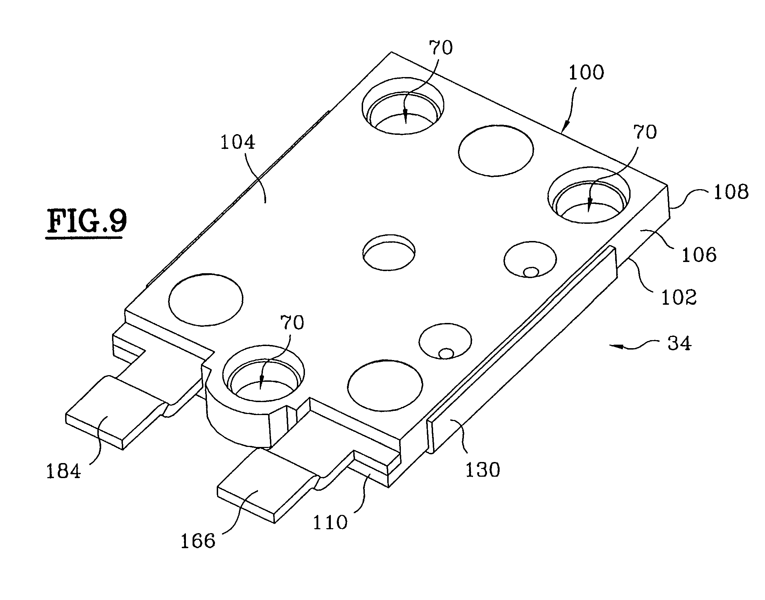

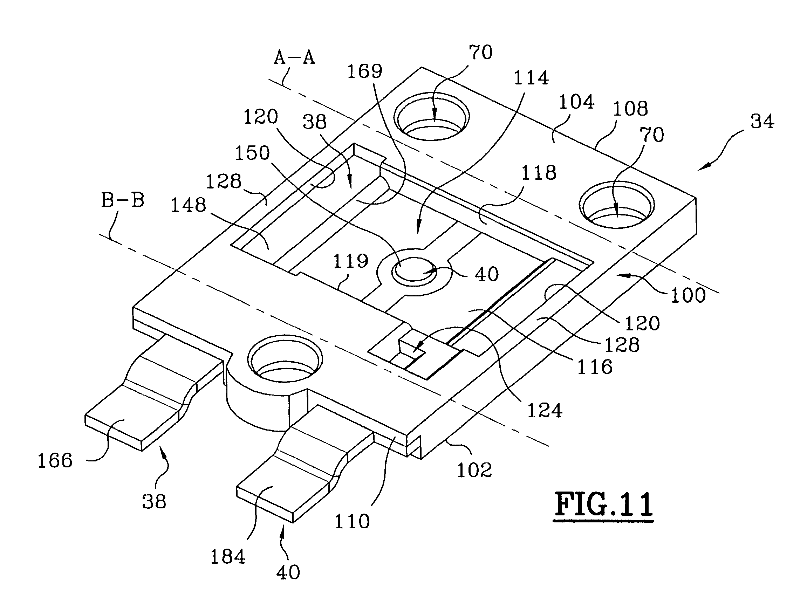

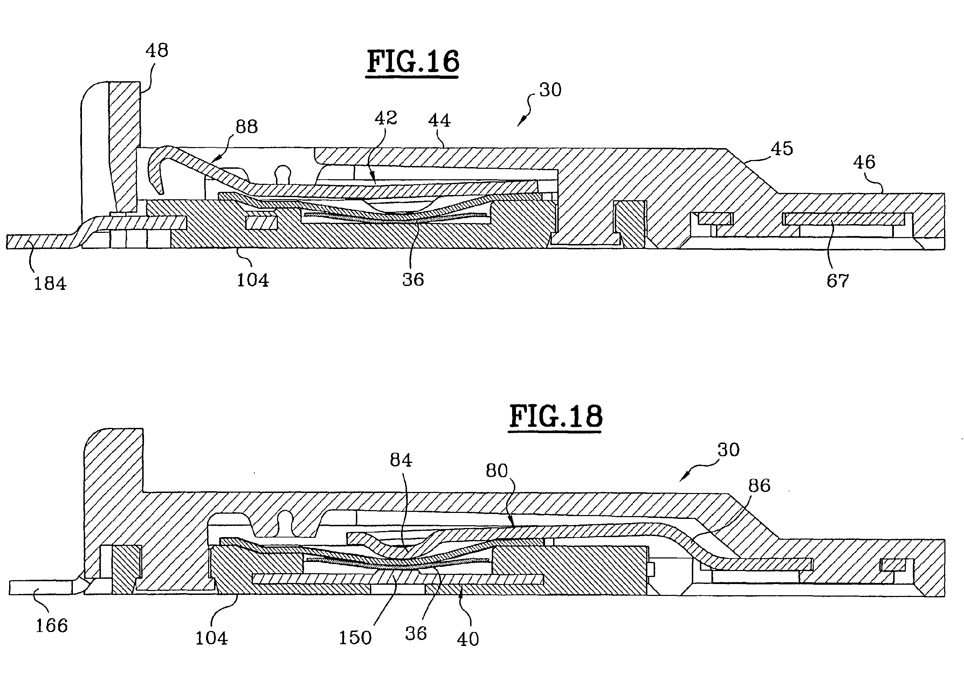

Figures 1 to 18 show an electrical switch 30 which is a switch of the normally-open type for detecting the presence, in the working and/or end-of-insertion-travel position, of a smart card (not shown) in a read/write apparatus.

The switch 30 is illustrated in the form of a discrete component, that is to say that it has a cover 32 made of insulating material which, when the switch 30 is built into a connector for connecting a smart card, is an integral part of the support carrying the fixed contacts of the connector, for example according to the arrangement described in Application WO-A-95/33243.

However, for the sake of clarity of the explanations, it is preferred to "isolate" the switch 30 by illustrating it with an independent cover 32.

The switch 30 essentially consists of a lower switch unit 34 which has a tripping device 36 capable of engaging with two fixed contacts 148 and 150, forming part of two fixed contact strips 38 and 40, due to the action of an actuating device 42 which is interposed vertically between the lower switch unit 34 and the upper cover 32.

As may be seen in particular in Figures 1 to 5, the cover 32 is an insulating plastic piece of hollow rectangular parallelepipedal general shape delimited by a plane upper face 44 of the upper wall, the front part 46 of which is surbased so as to allow passage for etched or embossed features of the face of a smart card (not shown) which bears the contact pads of the chip, when the latter bears on the horizontal upper face 44, the longitudinal position of the card with respect to the switch 30 being determined by the front transverse edge of the card coming into abutment against the facing transverse face 48 of a shoulder 50 which projects vertically from the upper face 44.

When the switch is used in a device in which the card is introduced vertically, i.e. perpendicular to its plane, the shoulder 50 may be omitted, the switch then providing the function of detecting the presence of the card, but also the function of detecting the end of insertion travel.

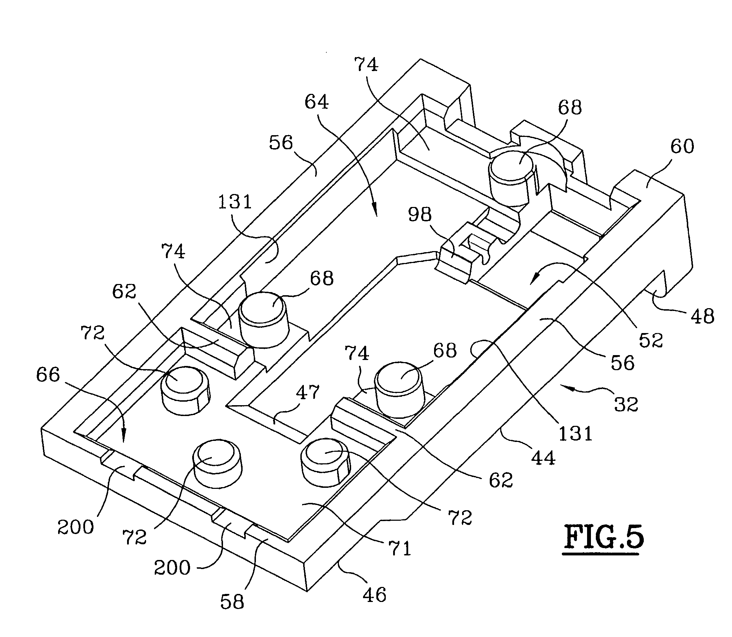

Near this shoulder 50, the upper wall of the insulating cover 32 is pierced by a rectangular opening 52 which emerges vertically downwards in the internal cavity 64, 66 which, as may be seen in Figure 5, is open vertically downwards and which is delimited by parallel longitudinal edges 56 and by two transverse edges, namely the front end transverse edge 58 and the rear end transverse edge 60.

The cavity 64, 66 consists of a rear part 64 of greater longitudinal dimension, which extends between the rear transverse edge 60 and an interrupted intermediate rib 62, and of a front part 66, of smaller longitudinal dimension, which extends between the rib 62 and the front transverse edge 58.

The rear part 64 of the cavity houses the lower switch unit 34 while the front part 66 houses the heel 67 for fastening the actuating device 42.

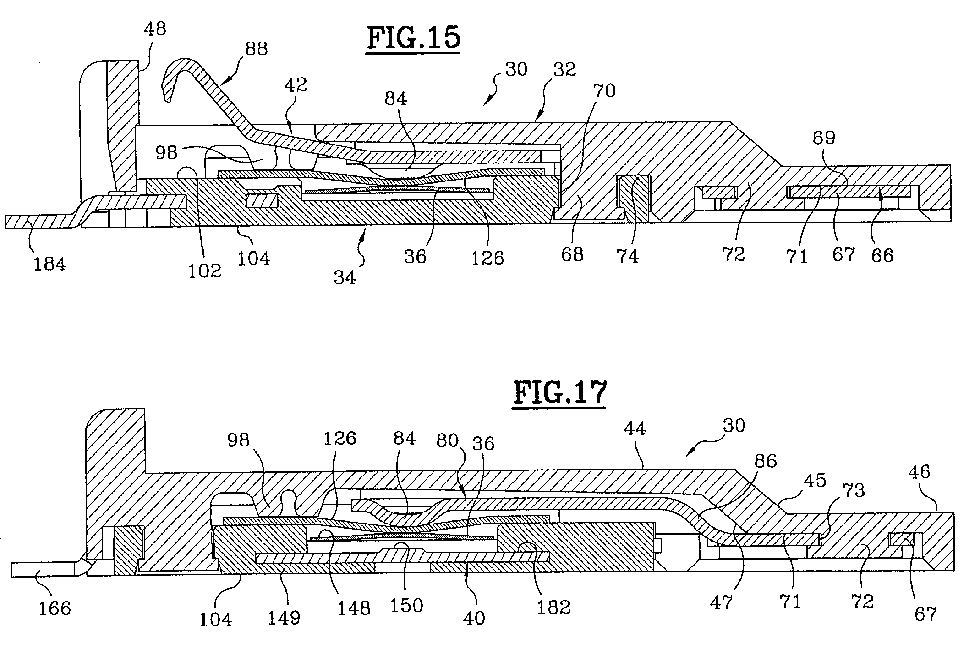

In order to fasten the switch unit 34, three studs 68 extend vertically downwards from the bottom of the cavity 64 and are arranged in a triangle in order to be housed in three complementary holes 70 formed in the body 100 made of insulating material of the switch unit 34 which is fastened in position in the cavity 64 by hot crimping the free ends of the studs 68 (see Figures 15 and 17).

Likewise, three studs 72 extend vertically downwards from the bottom 71 of the front cavity 66, these being arranged in a triangle in order to be housed in three complementary holes 72 in the heel 67 of the actuating device 42, which is fastened by hot crimping the free ends of the positioning and fastening studs 72 (see Figure 17).

The bearing plane for positioning the switching unit 34 in the rear cavity 64 consists of three plane zones 74 coplanar with the bottom of the rear cavity 64, from which zones the studs 68 extend.

The heel 67 of the actuating device 42 is positioned vertically in the front cavity 66 by its upper face 69 bearing against the plane bottom 71.

The actuating device or actuator 42 is, of course, fastened in the cavity 66 before the switch unit 34 is mounted and fixed in the rear cavity 64.

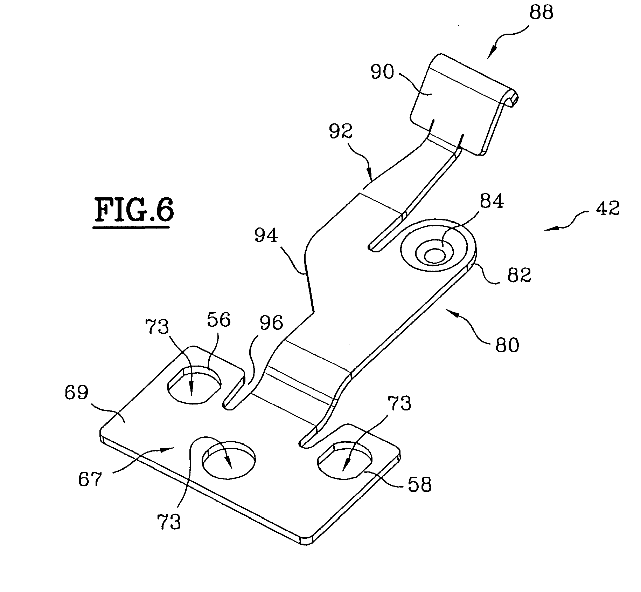

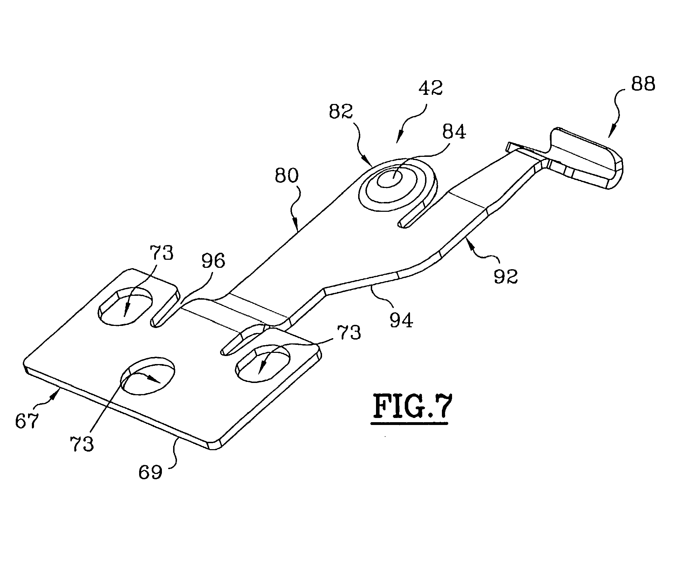

The actuator 42 illustrated in detail in particular in Figures 6 and 7 is of a general design known, for example, from document WO-A-95/33244, apart from the design of its heel 67 which makes it possible to reduce the height of the switch and makes it easier to produce by bending, without making a 90° fold. It is a single actuating element produced by cutting and bending a sheet of elastically deformable material, for example a sheet of metal.

Beyond the heel 67, the actuator 42 has a control blade 80 which extends longitudinally forwards in a plane parallel to that of the heel 77 but offset vertically upwards with respect to the latter by virtue of its S-shaped bent root which corresponds to the step 46 formed in the upper wall, the bend 86 matching the profile of the internal face of the chamfer 45 and which terminates at its free end 82 in a convex actuating part 84, the convexity of which faces vertically downwards, that is to say towards the switch unit 34.

With regard to Figure 6, the downward vertical movements of the control blade 80 are made by flexure of its bent root 86 and they are obtained by acting, via the front transverse edge of a smart card, on an actuating pedal 88 having an inclined ramp 90 and which is arranged at the front free end of a longitudinal arm 92 forming an actuating lever which is connected to the middle part of the control blade 80 by a bent part 94.

In the mounted, rest position, as may be seen in particular in Figure 1, the actuating pedal 88 with its ramp 90 projects vertically across the opening 52 in order to extend above the plane of the upper face 44 of the insulating cover 32.

The other characteristics and advantages of the actuating device 42 are mentioned in document WO-A-95/33244, for the contents of which reference may be made for further details.

Fastening the heel 67 by hot crimping the three studs 72 ensures that the heel 67 is held in place very well, equivalent to this heel being embedded, so that the assembly consisting of the control blade 80 and the actuating lever 92 bends in the manner of an elastic beam.

As may be seen in Figures 6 and 7, two longitudinal slots 96, formed in the heel 67 in the region of the root 86, make it possible to increase the elastic bending length of the actuator 42 without increasing its total length. Two of the holes 73 have longitudinal flats which are complementary to the corresponding flats on two of the studs 72 (see Figure 5).

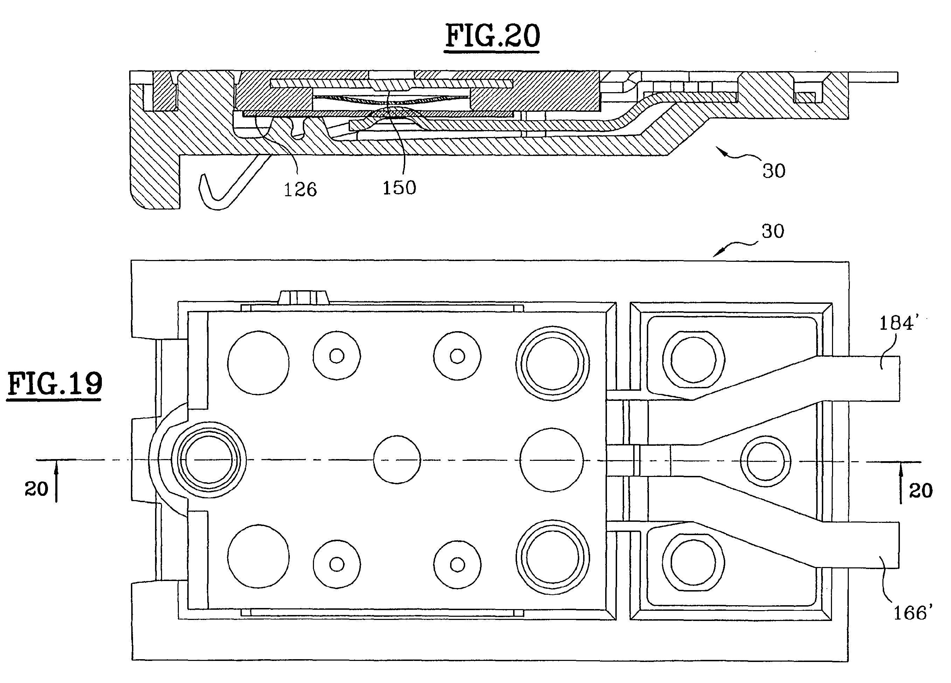

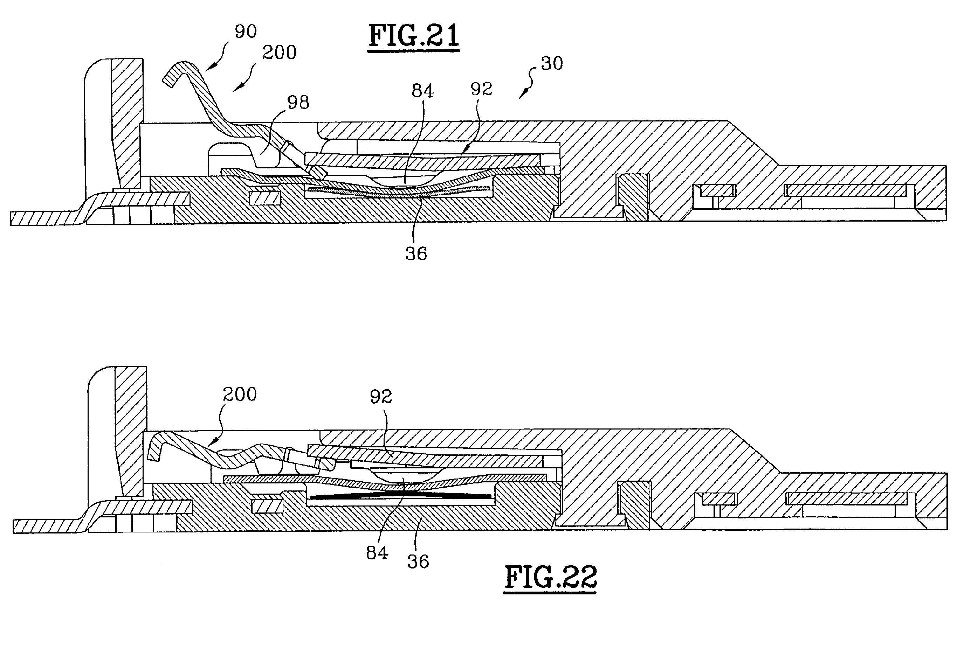

As will be explained below with reference to Figures 20 and 21, two yokes 98 have been made in the bottom of the rear cavity 64 near the opening 52 in order to allow an actuating rocker, in the normally closed-type version of the switch, to pivot.

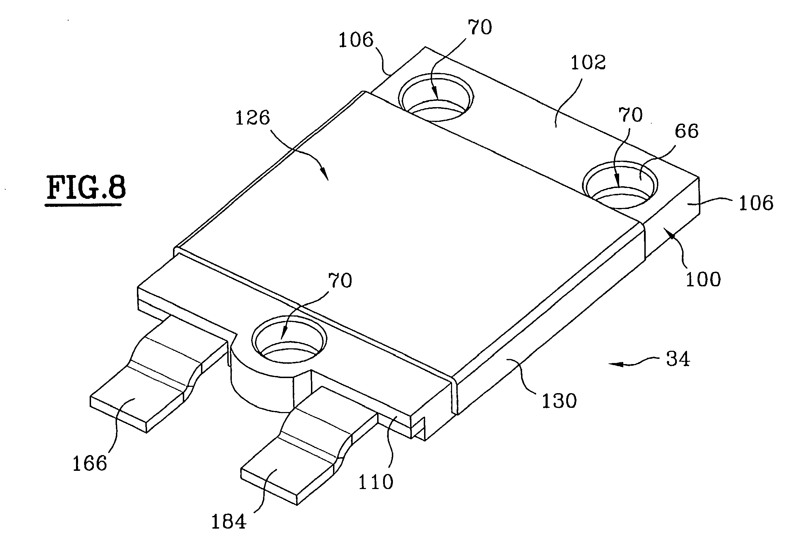

The switch unit 34 will now be described in greater detail with reference in particular to Figures 8 to 11.

As may be seen in these figures, the switch unit 34 essentially consists of a support 100 made of insulating material carrying fixed contacts, this support being in the form of a thin rectangular plate delimited vertically by an upper face 102 and a lower face 104 which are plane and parallel.

The insulating support is delimited longitudinally by two longitudinal parallel opposed edges 106 and transversely by a rear transverse edge 108 and a front transverse edge 110.

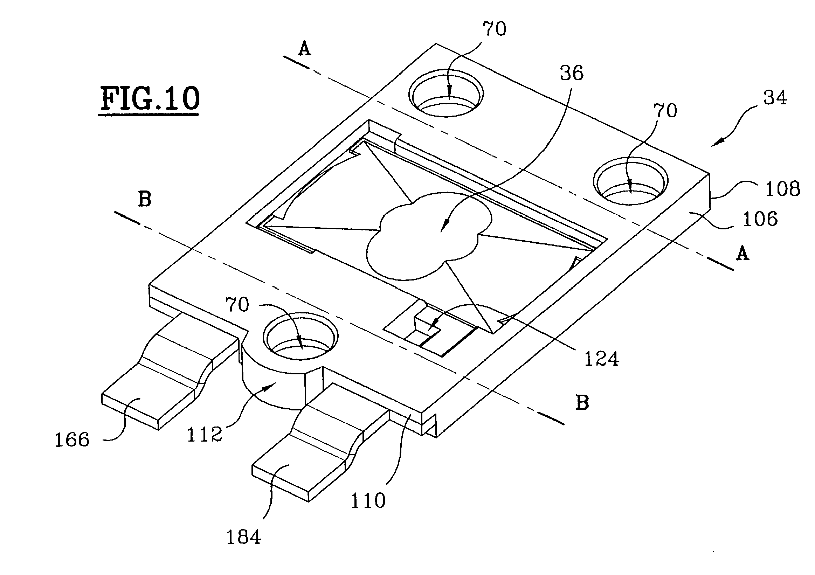

Drawn in Figure 10 are two dot-dash lines A-A, to the rear, and B-B, to the front, which delimit longitudinally between them a central part of the switch unit 34.

Two of the holes 70 for mounting the switch unit 34 in the rear cavity 64 are formed in that rear part of the support 100 which is longitudinally delimited by the line A-A and by the rear transverse edge 108, while the third hole 70 is formed in that front part of the support 100 which is longitudinally delimited by the line B-B and the front transverse edge 110 with a cylindrical excroissance 112 of material which extends longitudinally towards the front around this third hole.

Between the lines A-A and B-B, the central part of the support 100, and therefore of the switch unit 34, includes a cavity 114 which is open vertically upwards in the upper face 104 and which is delimited by a plane horizontal bottom 116.

Seen from above, the outline of the cavity 114 is approximately rectangular and is delimited by two long transverse edges, namely the rear transverse edge 118 and the front transverse edge 119, as well as by two short lateral edges 120.

According to a known general arrangement, the fixed contacts 148 and 150 are arranged inside the cavity 114.

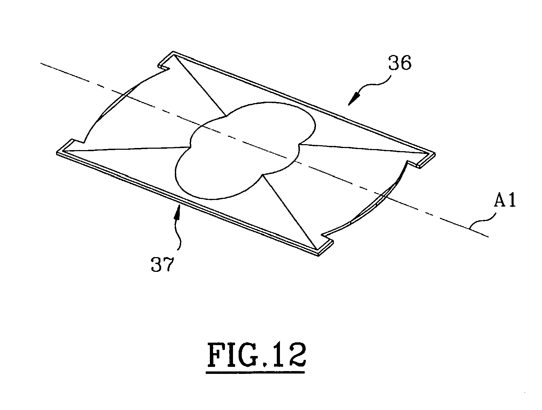

In the embodiment of a switch according to the invention, the cavity 114 houses a tripping device 36 of known general design, which is a monostable dome having a rectangular outline and with the shape of a truncated pyramid whose total thickness, in the free state, illustrated in Figure 12, is equal to approximately 0.2 mm, its outline 37 being a rectangular outline complementary to the outline 118, 119, 120 of the cavity 114.

Near the front transverse edge 119 of the cavity 114, the support 100 has a small cavity 124 which is open in the upper face 104 which emerges longitudinally in the cavity 114 and which is formed in the region lying between the line B-B and the transverse edge 119.

The purpose of the small cavity 124 is to allow the actuating pedal 88 in the working position to be retracted when a card is in the position in which it bears on the upper face 44 of the insulating cover 32.

It will be noted that all the openings in the blind cavities 114 and 124, which communicate and which house the electrically active parts of the switch unit 34, i.e. the fixed contacts 148 and 150 and the tripping device 36, are arranged between the lines A-A and B-B, while the through-holes 70 are arranged outside the central region delimited by these lines A-A and B-B.

The two coplanar end regions arranged outside the lines A-A and B-B serve as a plane for the switch unit 34 to bear on the coplanar regions 74 of the bottom of the rear cavity 64 of the cover 32. Thus, the thickness tolerance in the adhesive film is not involved in assembling the components. This configuration provides great dimensional stability.

It is thus possible to ensure most effectively that the active central region of the switch unit 34 is sealed by means of an adhesive film 126, which is illustrated in the bonded position in Figure 8, which may, for example, consist of a portion of a strip of adhesive film, the width of which corresponds approximately to the distance between the lines A-A and B-B.

This design makes it possible to avoid having to make complex cuts in the adhesive film and therefore to automate this manufacturing and assembly step very easily.

Given the small width of the lateral strips 128 of the upper face 104 which delimits the cavity 114, and in order to avoid cutting and precisely positioning the film 126 in the length of the tape from which it is manufactured, it is advantageous to fold over a portion 130 of additional length on each side of the insulating support 100 by bonding them to its longitudinal facets or edges 106 which are free of any asperity.

In addition, the reliability of the sealing is confirmed by the fact that the folded-over side parts 130 are held mechanically clamped against the facets 106 by the longitudinally oriented facing internal side faces 131 which laterally delimit the rear cavity 64 which houses the switch unit 34.

As may be seen in particular in Figures 15 to 18, the hot riveting, in order to crimp the free ends of the studs 68 and 72, is performed through the thickness, i.e. over the height, of the cover 32, hence an optimum reduction in the overall height of the switch.

The total thickness of the switch 30 is mainly determined by the total thickness of the switch unit 34 which results from the sum of the thickness of the triggering dome 36 and of the thickness of the support 100 which carries the fixed contact strips 38 and 40 which are the two elements which, in association with the tripping device 36, provide the active switching function.

According to the teachings of the invention, the thicknesses of these two elements have been reduced to the minimum.

As mentioned above, the dome 36 has a small total thickness, at rest, equal to approximately 0.2 mm.

The strips of fixed metal contacts 38 and 40 have a thickness of 0.17 mm so that they have a minimum rigidity at their connection output, these contacts being soldered by users to a printed-circuit board which houses the switch or a connector incorporating the switch.

Depending on the offset in height (here, equal to 0.1 mm) between the lateral fixed contact 148 of the fixed contact strip 38 and the central fixed contact disc 150 of the central fixed contact strip 40, which are arranged inside the cavity 114, the minimum thickness of the insulating plastic 149 (see Figure 17) overmoulded around the two fixed contact strips 38 and 40 is 0.13 mm.

The height between the lower face 104 and the top point of the lateral fixed contact 148 is therefore equal to 0.4 mm (0.13 + 0.17 + 0.1).

The total thickness or height of the "active function" of the switch in the rest state is therefore equal to this height of 0.4 mm + 0.2 mm corresponding to the height of the tripping device at rest, i.e. 0.6 mm.

This total thickness of the active function of the switch makes it possible to produce connectors incorporating such a switch having a total thickness, between the plane of the upper face of the printed-circuit board on which the connector is mounted and the plane of the lower face of the smart card, which is equal to:
- 1.25 mm if the cavity in the insulating support of the connector housing the switch unit 34 has an upper wall made of insulating material which is inserted between the actuator 42 and the smart card; or
- 1 mm if the plastic cavity in the connector is provided with an upper opening (i.e. a configuration in which, in the rest position, the top point of the actuator 42 is flush with the plane in which the smart card slides over the connector.

The design of a switch manufactured according to the invention, and in particular the geometry of the fixed contacts 48, 50, apart from the fact that it makes it possible to obtain the abovementioned minimum height, has the advantage of being very simple and very precise and dimensionally stable, making it possible to minimize the manufacturing variations which, in the technological solutions of the prior art, essentially result in the build-up of manufacturing tolerances of many dimensions in bending the lateral and central contacts and which would be incompatible with the small thickness of the switch manufactured according to the teachings of the present invention.

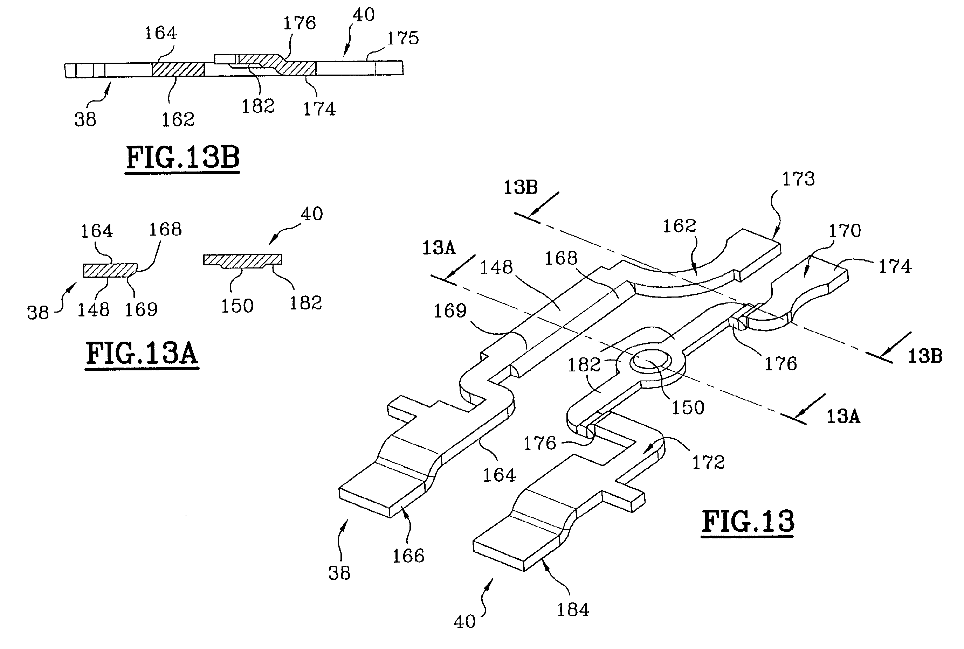

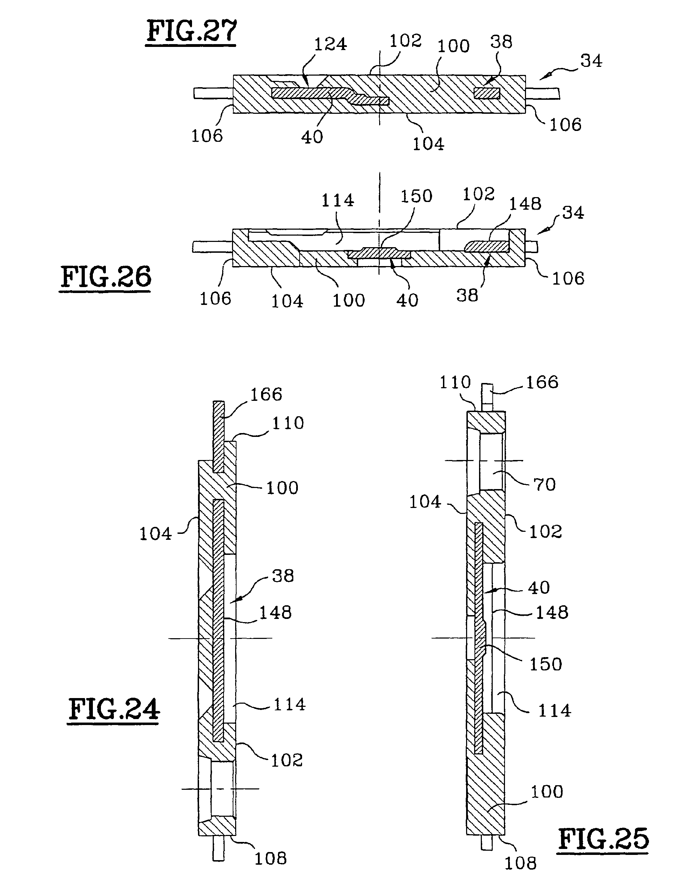

The two fixed contact strips 38 and 40, as well as their arrangement in the switch unit 34 will now be described in detail, especially with reference to Figures 13, 14 and 23 to 27.

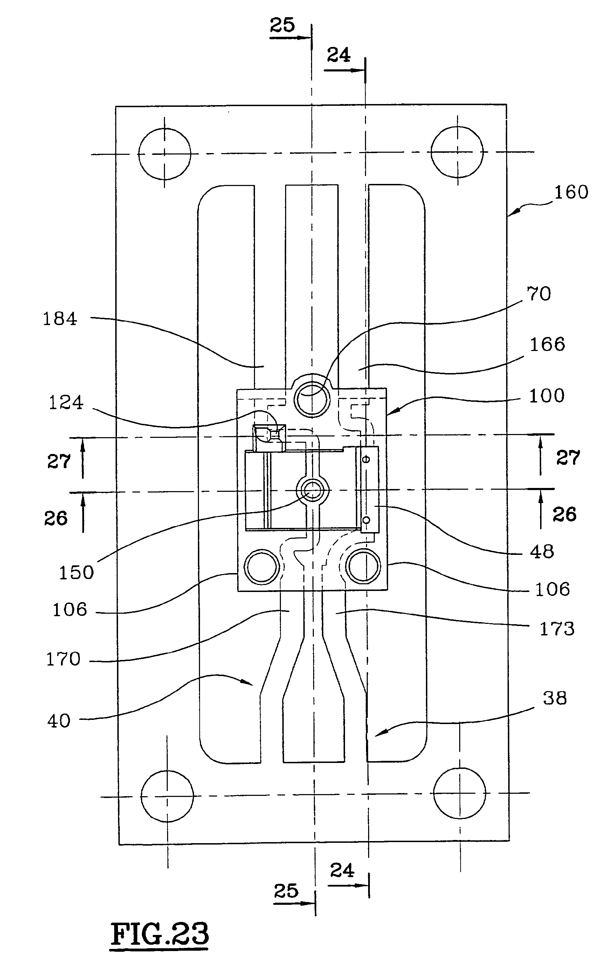

The two fixed contact strips 38 and 40 are, as may be seen in particular in Figure 23, produced by cutting and bending the same sheet 160 of conducting material.

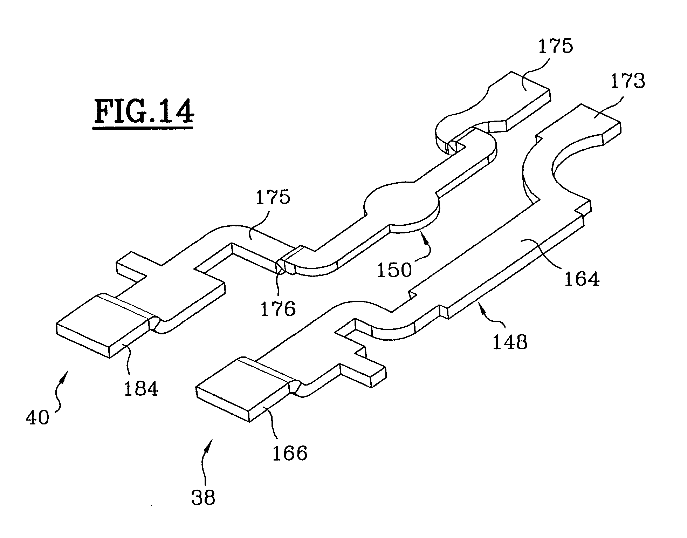

As may be seen in Figures 13 and 14, the lateral fixed contact strip 38 is plane over its entire upper face 162 which is parallel to its lower face 164.

Its front free longitudinal end 166, which constitutes an output tab for connecting the switch to a printed-circuit board by soldering, is bent after the operation of overmoulding the insulating body 100 in order to bring it to the level of the printed-circuit board.

The output 166 therefore is not involved in the process of manufacturing the support 100 which carries the fixed contacts.

A rounded shape 166 is advantageously formed by stamping at the time of cutting the lateral fixed contact strip 38 in order to improve the quality of the line of contact between the dome 36 and the lateral fixed contact 148.

Consequently, the only manufacturing tolerance involved in the lateral fixed contact strip 38 is that of the thickness of the metal from which it is produced by cutting, i.e. a tolerance of a few microns.

The rear longitudinal end 170 and the front longitudinal end 172 of the central fixed contact strip 40 lie in the same plane as that of the lateral fixed contact strip 38, that is to say that their upper face 174 and their lower face 175 are coplanar with the faces 162 and 164 of the lateral fixed contact strip 38, these two planes corresponding to the two faces of the sheet of metal from which the two fixed contact strips 38 and 40 are cut simultaneously.

The central fixed contact strip 40 has a bend 176 making it possible to produce a downwards vertical offset between the horizontal plane of the upper face of the central fixed contact disc 150 and the fixed contact points 169 of the lateral fixed contact 148.

This offset in the plane is particularly advantageous for proper operation of the tripping dome 36 and it makes it possible to increase the deflection of the latter.

In order to guarantee that electrical contact has been established between the dome 36 and the central contact 150, the middle part of the central fixed contact 40 is partially flattened in the regions 182 of the upper face of the middle part. In this way, the vertical distance of the central contact 150 with respect to its lower face is very precise so that it corresponds to the precision in the thickness of the metal sheet, this precision being very much greater than that resulting from a drawing operation.

The thickness "freed" by the flattening 182 makes it possible to ensure that the dome 36 at rest is electrically isolated from the central contact 40, 150.

The manufacturing tolerance on the depth of this flattening is not involved in the functional definition and in the total thickness of the switch unit 34, this flattening constituting, in fact, a step.

As in the case of the lateral fixed contact 148, the connection output 184, which extends longitudinally from the overmoulded insulating support 100, is bent after the overmoulding operation and is not involved in the process of manufacturing the switch unit 34.

Consequently, the only manufacturing tolerances involved in the central fixed contact 40 are those resulting from the bending 176, of the order of a few hundredths of a millimetre, and that of the thickness of the metal.

Since the two fixed contact strips, namely the lateral fixed contact strip 38 and the central fixed contact strip 40, are cut simultaneously from the same metal sheet, there is, for a given switch, no variation between their thickness even if the latter varies within the range of tolerances on the thickness of the metal sheet from one switch batch to another. The fixed contacts introduce only two dimensions and therefore only two ranges of tolerances, which are those on the thickness of the metal sheet and on the bending 176, in the functional dimensioning of the switch unit 34.

Moreover, the configuration of the two end pairs, 166, 184 at the front and 173, 174 at the rear, which are each respectively attached to two edges of the metal sheet 160 which remain after cutting the contacts for the subsequent manufacturing operations (coating, overmoulding, assembly of the dome, finishing of the outputs and assembly in the connector, etc.), makes it possible to guarantee very good mutual coplanarity of the contacts after they have been cut and during the overmoulding operation.

The end-of-travel switch for the smart-card connector must also meet, in terms of the thickness, the constraint in the embossment of the cards, the position and dimensions of which are defined by the ISO 7811-A standard.

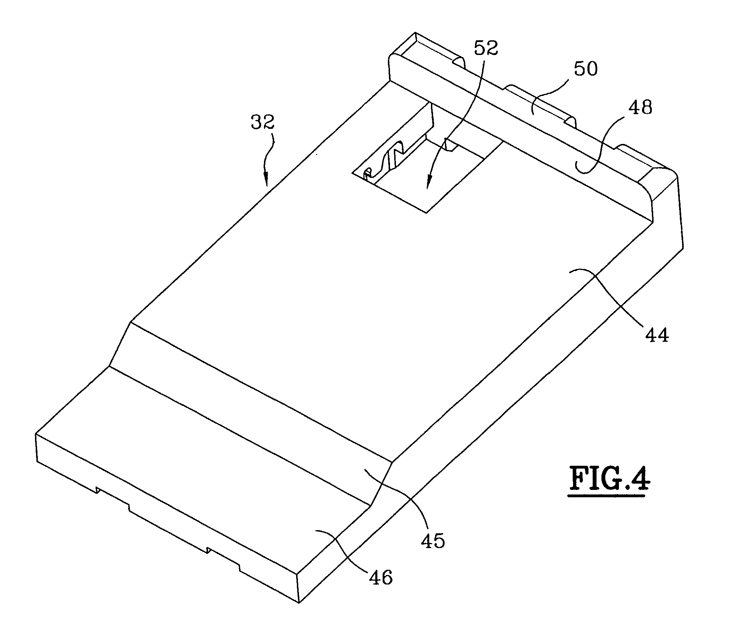

This constraint is expressed by a maximum longitudinal distance D of approximately 8 mm between the stop 48 and the chamfer 45 which delimit the thinned part 46 (see Figure 4) of the cover 32, the vertical offset between the surfaces 44 and 46 being approximately 0.6 mm.

The available longitudinal distance of 8 mm is distributed between the passage of the actuator 42, the front attachment of the unit 34, the cavity 114 housing the dome 36, the rear attachment plus the region serving for adhesion of the protective film 126.

In order to optimize this dimensional distribution, the longitudinal axis of the dome, i.e. its axis A1, has been placed so as to be parallel to the card stop 48, i.e. perpendicular to the longitudinal axis of the actuating device 42 and of the switch unit 34 so that it is the width of the rectangular dome which is involved in the distance D. This arrangement corresponds to the optimum configuration of the outputs 166, 184 (or 166', 184' in the case of the embodiment illustrated in Figures 19 and 20) as the axis of the outputs of the switch is perpendicular to the card stop 48 and therefore parallel to the outputs of the contacts of the associated connector.

The cavity 114 housing the dome 36 has a rectangular outline and is produced by a 0.2 mm increase in the insulating overmoulding material with respect to the upper plane of the lateral contact 148 on which the dome 36 is placed.

Thus, the peripheral part of the upper face 104 lying between the lines A-A and B-B is mechanically reinforced without increasing the maximum height of 0.6 mm of the active part of the switch unit.

As may be seen in the alternative embodiment illustrated in Figures 19 and 20, the design of the fixed contact strips 38 and 40 and of the overmoulding of the insulating body 100 of the switch unit 34 has been arranged so as to allow the use of outputs 166' and 184' for connection to the other longitudinal ends of the fixed contact strips 38 and 40.

For this purpose, so as to use standard components whatever the orientation of the outputs, and as may be seen in Figure 5, notches 200 are formed in the lower face of the front transverse edge 58.

The alternative embodiment illustrated in Figures 21 and 22 corresponds to a switch of the normally-closed type manufactured according to the teachings of the invention.

The main difference in this design compared with that of the normally open switch described previously resides in the fact that the actuating lever of the actuating device 42 is actuated by a rocker 200 which constitutes the actuating pedal 90 according to the teachings of document WO-A-FR-95/93244, the contents of which may be referred to in order to understand in detail the design and operation of the rocker 200, as well as the general mode of operation of the two types of switches, namely the normally open type and the normally closed type, which have just been described in detail.

The invention also allows the use of a switch having a very small transverse width, the latter being in fact slightly greater than the largest dimension of the rectangular outline of the tripping dome 36, as well as having a short length.

The total transverse width of the switch, including the side walls of the edges 56 is less than 5.08 mm, thereby making it possible to arrange the two outputs 166, 184 which are at the standardized spacing "p" of 2.54 mm, that is to say at the spacing of the connection ends of the contact blades of the connector into which the switch is built.

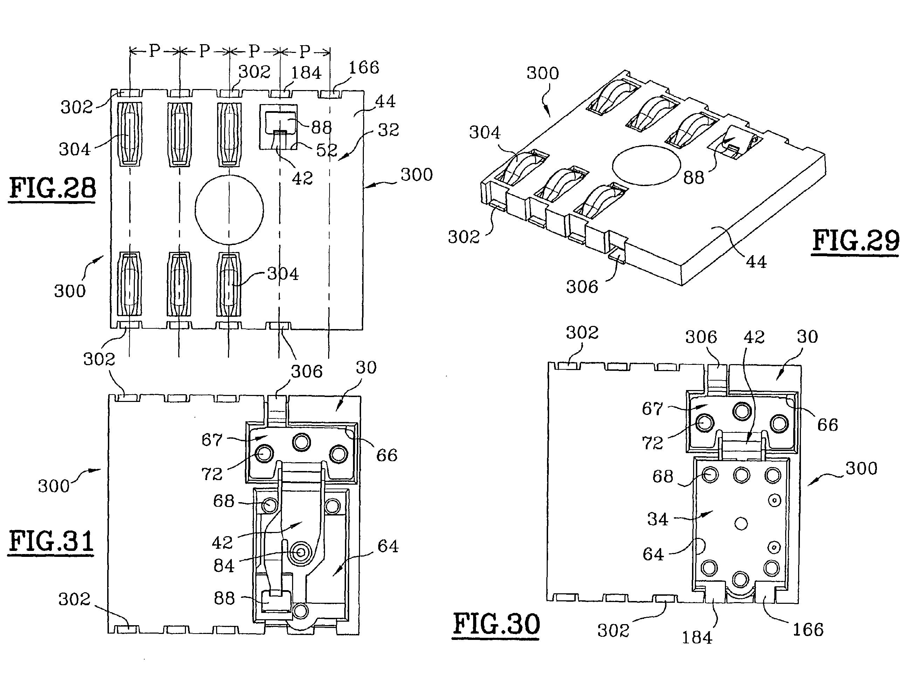

The small width and the 2.54 mm spacing of its outputs 166 and 184 make it possible, as illustrated in Figures 28 to 31, to position the switch unit in a connector 300 so that its outputs 166, 184 are aligned transversely, and at the same spacing, with the connection ends 302 of the contact blades 304 of the connector, this being so without any loss of spacing.

In most applications, only five, six or seven contact areas, aligned in pairs, on the smart card are used.

In general, there is, among the eight standardized contact areas on the card, at least one contact area which is "free", opposite which it is therefore not possible to provide a contact blade of the connector, which allows incorporation of the switch by providing a connector having five or seven contact blades. The contact area on the card aligned with the "free" area may then be electrically connected to a track on the printed-circuit board via the switch.

Insofar as the actuating device 42 is made of a conducting material, it is in fact possible to extend the heel 67 by a connection tab 306 in order to use an additional contact of the connector equipped with the switch, the element 42 then providing a first function, that of a device for actuating the switch, and a second function, that of a contact blade for connecting the contact area on the chip when this area "bears" on the actuating pedal 88 when the card, for example according to the so-called MICROSIM standard, is installed vertically.

The additional output is also at the same spacing as the outputs 302 and aligned transversely with the latter.

The connector with a built-in switch is thus available, the dimensions of which, apart from its thickness, are very small and correspond to the overall size of a conventional connector having six or eight signal contact blades aligned in pairs with a spacing of 2.54 mm, the connector then no longer having a lateral excroissance as in the prior art.

## Claims

1. Process of manufacturing an electrical switch (30), built into an electrical connector, for detecting the presence of a smart card in a read/write apparatus, the switch (30) having a switch unit (34) forming a support (100) for carrying fixed contacts (148, 150), the fixed contacts being an elongate lateral fixed contact (38,148) and a point-like central fixed contact (40,150), which support delimits a cavity (114) open in its upper face (102), at the bottom of which support the elongate lateral fixed contact (38, 148) and the point-like central fixed contact (40, 150) are placed, and which support (100) receives a dome-shaped tripping device (36) which is elastically deformable, towards a working position, due to the action of an actuating device (42) which acts on the central part of the tripping device (36) in order to establish an electrical connection between the lateral fixed contact, on which lateral fixed contact the tripping device (36) is permanently in bearing contact by its lower outline, and the central fixed contact (40,150) with which the central part of the tripping device (36) comes into contact in the working position, wherein the support (100) is overmoulded around the fixed contacts (148, 150) which are extended longitudinally through the outside of the insulating support (100) in order to constitute two free connection ends (166, 184) of the switch (30), the actuating device (42) including an elastically deformable control blade (80), a first end of which control blade is embedded in a cover (32) of the switch and the second end (84) of which control blade engages with the tripping device (36) and includes an actuating lever (92), made in one piece with the control blade, which lever acts on the control blade (80) and which lever is capable of pivoting about an axis parallel to the plane of the card in response to an actuating force which is applied to it by the smart card, **characterized in that** the lateral fixed contact (38, 148) and the central fixed contact (40, 150) are produced by cutting out two longitudinal strips (38, 40) from the same sheet (160) of conducting material, the lower faces (164, 175) of which two longitudinal strips being coplanar, **in that** the middle part of the central contact strip (40), which has the point-like central fixed contact (150), is bent vertically downwards in order to offset the central fixed contact (150) vertically downwards with respect to the lateral fixed contact (148), **and in that** the free connection ends (166, 184) are produced by bending after the support (100) of insulating material has been overmoulded.

2. Process of manufacturing an electrical switch according to the preceding claim, **characterized in that** the thickness of the lateral contact strip (38), which has the elongate lateral fixed contact (148), and the central contact strip (40) is equal to 0.17 mm and **in that** the vertical offset between the two contacts, the lateral fixed contact (148) and the central fixed contact (150), is equal to 0.1 mm.

3. Process of manufacturing an electrical switch according to claim 2, **characterized in that** the height between the plane lower face (104) of the insulating support (100) and the top point of the lateral contact (148) is equal to 0.4 mm.

4. Process of manufacturing an electrical switch according to either of Claims 2 or 3, **characterized in that**, at rest, the height of the tripping device is equal to 0.2 mm.

5. Process of manufacturing an electrical switch according to any one of claims 2 to 4, **characterized in that** the tripping device is a dome in the form of a truncated pyramid with a rectangular outline, the largest dimension of which is oriented transversely with respect to the longitudinal axis of the switch (30).

6. Process of manufacturing an electrical switch according to any one of claims 2 to 5, **characterized in that** the upper face of the switch unit (34) has a cavity (124) into which part of the actuating lever (92) is retracted in the working position.

7. Process of manufacturing an electrical switch according to the preceding claim, **characterized in that** the cavities (114, 124) formed in the upper face (104) of the insulating support (100) are adjacent and are open in a part closed by an adhesive sealing film (126).

8. Process of manufacturing an electrical switch according to any one of claims 2 to 7, **characterized in that** the cover has an upper wall (44) which delimits an internal cavity having a rear part (64), in which the switch unit (32) is fastened by crimping the fastening studs (68) which extend vertically through the holes (70) in the insulating support (100), and having a front part (66) adjacent to the rear part (66) in which a heel (67) for embedding the rear end of the actuating device (42, 80, 92) is fastened by crimping the studs (72) which extend vertically through the holes (73) in the heel (67), from which the actuating device (80, 92) extends vertically from the rear to the front above the upper face (102) of the switch unit (34).

9. Process of manufacturing an electrical switch according to any one of claims 2 to 8, **characterized in that** the cover (32) is a part of an insulating support for carrying the fixed contacts of an electrical connector for connecting a smart card to a read/write apparatus.

10. Process of manufacturing an electrical switch according to the preceding claim, **characterized in that** the two free connection ends (166, 184) of the switch (30) are parallel to the two connection ends (302) of the contact blades (304) of the connector (300) and are spaced apart transversely by a spacing (p) equal to the transverse spacing between the connection ends (302) of the contact blades (304) and **in that** one (184) of the free connection ends of the switch is spaced apart transversely by a spacing (p) from the connection end (302) of the adjacent contact blade (304).

11. Process of manufacturing an electrical switch according to the preceding claim, **characterized in that** the free end (88) of the actuating lever extends above the said one free connection end (184) of the switch and **in that** the actuating device (42) is made of a conducting material and includes a connection tab (306) which is aligned with the said end (184) and is longitudinally opposed so that the actuating device constitutes an additional contact blade of the connector (300).

## Patentansprüche

1. Herstellungsverfahren für einen elektrischen Schalter (30), der in einem elektrischen Steckverbinder eingebaut wird, zum Erfassen der Anwesenheit einer intelligenten Chipkarte, auch Smartcard genannt, in einer Lese-/Schreibvorrichtung, wobei der Schalter (30) eine Schaltereinheit (34) aufweist, die einen Träger (100) für ein Übertragen der Festschaltkontakte (148, 150) bildet, wobei die Festschaltkontakte aus einem seitlich angeordneten, länglichen Festschaltkontaktstück (38, 148) und einem zentral angeordneten, knopfähnlichen Festschaltkontaktstück (40, 150) bestehen, deren Träger einen Hohlraum (114) begrenzt, wobei dessen obere Fläche freiliegt, in welchem auf dem Boden des Trägers das seitliche, längliche Festschaltkontaktstück (38, 148) und das zentrale, knopfähnliche Festschaltkontaktstück (40, 150) platziert sind, und in welchem der Träger (100) einen kuppenartigen Auslösemechanismus (36) aufnimmt, der zur Arbeitsstellung hin elastisch verformt wird - bedingt durch die Einwirkung einer Betätigungsvorrichtung (42), die auf den mittleren Teil des Auslösemechanismus (36) einwirkt, um eine elektrische Verbindung zwischen dem seitlichen Festschaltkontakt, in dem der seitliche Festschaltkontakt des Auslösemechanismus (36) mit dem unteren Kuppenprofil in einem ständigen Auflagerungskontakt steht, und dem zentralen Festschaltkontakt (40, 150) herzustellen, mit dem der mittlere Teil des Auslösemechanismus (36) in seiner Arbeitsstellung in Kontakt kommt, wobei der Träger (100) mit einem Überformgussverfahren um die feststehenden Kontaktstücke (148, 150) herum eingegossen wird, welche sich durch die Außenseite des isolierenden Trägers (100) hindurch der Länge nach erstrecken, um zwei freiliegende Anschluss-Endstücke (166, 184) des Schalters (30) auszubilden, wobei die Betätigungsvorrichtung (42) eine elastisch verformbare Betätigungszunge (80) einschließt, wovon ein erstes Ende der Betätigungszunge in einer Abdeckung (32) des Schalters integriert ist, und wovon das zweite Ende (84) der Betätigungszunge mit dem Auslösemechanismus (36) in Eingriff gelangt und einen Betätigungshebel (92) aufweist, der mit der Betätigungszunge als Formteil in einem Stück hergestellt ist, wobei der Hebel auf die Betätigungszunge (80) einwirkt, und wobei der Hebel um eine Achse herum schwenken kann, die parallel zur Ebene der Karte verläuft, und zwar in Reaktion auf eine Betätigungskraft, welche auf diesen durch die Smartcard beaufschlagt wird, **dadurch gekennzeichnet, dass** das seitliche, feststehende Kontaktstück (38, 148) und das zentrale, feststehende Kontaktstück (40, 150) durch ein Herausschneiden von zwei länglichen Streifen (38, 40) aus der gleichen Schicht (160) eines leitfähigen Materials gefertigt werden, wovon die unteren Flächen (164, 175) der zwei länglichen Streifen koplanar (in der selben Ebene liegend) angeordnet sind, **dadurch gekennzeichnet, dass** der mittlere Teil des zentralen Kontaktstreifens (40), welcher das zentrale, knopfähnliche Festschaltkontaktstück (150) umfasst, vertikal nach unten gekrümmt ist, um das zentrale Festschaltkontaktstück (150) mit Bezug auf das seitliche Festschaltkontaktstück (148) vertikal nach unten versetzt anzuordnen, und **dadurch gekennzeichnet, dass** die freiliegenden Anschluss-Endstücke (166, 184), nachdem der Träger (100) mit isolierenden Material übergossen worden ist, mit einer Krümmung hergestellt werden.

2. Herstellungsverfahren für einen elektrischen Schalter gemäß dem vorhergehenden Anspruch, **dadurch gekennzeichnet, dass** die Dicke des seitlichen Kontaktstückstreifens (38), der das seitliche Festschaltkontaktstück (148) umfasst, und die des zentralen Kontaktstückstreifens (40) mit 0,17 mm gleich ausgelegt ist, und **dadurch gekennzeichnet, dass** das vertikale Offset zwischen den zwei Schaltkontakten - dem seitlichen Festschaltkontaktstück (148) und dem zentralen Festschaltkontaktstück (150) - mit 0,1 mm gleich angeordnet ist.

3. Herstellungsverfahren für einen elektrischen Schalter gemäß Anspruch 2, **dadurch gekennzeichnet, dass** zwischen der planen Unterseite (104) des isolierenden Trägers (100) und der obersten Stelle des seitlichen Kontaktstückes (148) die Höhe 0,4 mm beträgt.

4. Herstellungsverfahren für einen elektrischen Schalter gemäß einem der Ansprüche 2 oder 3, **dadurch gekennzeichnet, dass** - während der Ruhezeit - die Höhe des Auslösemechanismus 0,2 mm beträgt.

5. Herstellungsverfahren für einen elektrischen Schalter gemäß einen der Ansprüche 2 bis 4, **dadurch gekennzeichnet, dass** der Auslösemechanismus eine Kuppe in Form einer trunkierten Pyramide mit einem rechtwinkeligen Umrissprofil aufweist, wobei deren größte Dimension mit Bezug auf die Längsachse des Schalters (30) transversal ausgerichtet ist.

6. Herstellungsverfahren für einen elektrischen Schalter gemäß einen der Ansprüche 2 bis 5, **dadurch gekennzeichnet, dass** die obere Fläche der Schaltereinheit (34) eine Aussparung (124) aufweist, in die sich in der Arbeitsstellung ein Teil des Betätigungshebels (92) zurückzieht.

7. Herstellungsverfahren für einen elektrischen Schalter gemäß dem vorhergehenden Anspruch, **dadurch gekennzeichnet, dass** die Hohlräume (114, 124), die in der oberen Fläche (104) des isolierenden Trägers (100) ausgebildet sind, benachbart aneinander grenzen und in einem Teilbereich freiliegend sind, der mit einer versiegelnden Klebefolie (126) geschlossen wird.

8. Herstellungsverfahren für einen elektrischen Schalter gemäß einen der Ansprüche 2 bis 7, **dadurch gekennzeichnet, dass** die Abdeckung eine obere Wand (44) aufweist, die einen inneren Hohlraum begrenzt, der ein hinteres Teil (64) umfasst, in welchem die Schaltereinheit (32) durch eine Crimpung der Befestigungsstifte (48) befestigt wird, die sich durch die Bohrlöcher (70) in dem isolierenden Träger (100) vertikal erstrecken, und der ein vorderes Teil (66) umfasst, das zu dem hinteren Teil (66) benachbart angeordnet ist, in welchem ein hinterer Absatz (67) für ein Integrieren des hinteren Endes der Betätigungsvorrichtung (42, 80, 92) durch eine Crimpung der Stifte (72) befestigt wird, die sich durch die Bohrlöcher (73) in dem hinteren Absatz (67) vertikal erstrecken, von dem sich die Betätigungsvorrichtung (80, 92) von deren hinteren Seite zur vorderen Seite über der oberen Fläche (102) der Schaltereinheit (34) vertikal erstrecken kann.

9. Herstellungsverfahren für einen elektrischen Schalter gemäß einen der Ansprüche 2 bis 8, **dadurch gekennzeichnet, dass** die Abdeckung (32) ein Bestandteil eines isolierenden Trägers bezüglich eines Übertragens der Festschaltkontakte eines elektrischen Steckverbinders zum Verbinden einer Smartcard mit einer Lese-/Schreibvorrichtung ist.

10. Herstellungsverfahren für einen elektrischen Schalter gemäß dem vorhergehenden Anspruch, **dadurch gekennzeichnet, dass** die zwei freiliegenden Anschluss-Endstücke (166,184) des Schalters (30) mit den zwei Anschluss-Endstücken (302) der Kontaktzungen (304) des Steckverbinders (300) parallel angeordnet sind, und dass sie in die Querrichtung mit einem Zwischenraum (P) voneinander beabstandet sind, welcher dem transversalen Abstand zwischen den Anschluss-Endstücken (302) der Kontaktzungen (304) entspricht, und **dadurch gekennzeichnet, dass** eines (184) der freiliegenden Anschluss-Endstücke (166, 184) des Schalters (30) mit einem Zwischenraum (P) von dem Anschluss-Endstück (302) der benachbarten Kontaktzunge (304) in die Querrichtung voneinander beabstandet ist.

11. Herstellungsverfahren für einen elektrischen Schalter gemäß dem vorhergehenden Anspruch, **dadurch gekennzeichnet, dass** sich das freie Ende (88) des Betätigungshebels (92) über dem beschriebenen, einen freiliegenden Anschluss-Endstück (184) des Schalters (30) erstreckt, und **dadurch gekennzeichnet, dass** die Betätigungsvorrichtung (42) aus einem leitfähigen Material hergestellt ist und eine Verbindungslasche (306) aufweist, die mit dem beschriebenen Anschluss-Endstück (184) fluchtend ausgerichtet und der Länge nach so gegenüberliegend angeordnet ist, dass die Betätigungsvorrichtung eine zusätzliche Kontaktzunge des Steckverbinders (300) ausbildet.

## Revendications

1. Procédé de fabrication d'un commutateur électrique (30), intégré à un connecteur électrique, pour la détection de la présence d'une carte à mémoire électronique dans un dispositif de lecture-écriture, le commutateur (30) comportant un bloc de commutateur (34) formant support (100) porte-contacts fixes (148, 150), les contacts fixes étant un contact fixe latéral allongé (38, 148) et un contact fixe central ponctuel (40, 150), ledit support délimitant une cavité (114) ouverte dans sa face supérieure (102) dans le fond de laquelle sont disposés le contact fixe latéral (38, 148) allongé et le contact fixe central ponctuel (40, 150), et ledit support recevant un organe de déclenchement (36) en forme de dôme qui est déformable élastiquement, vers une position de travail, sous l'action d'un organe d'actionnement (42) qui agit sur la partie centrale de l'organe de déclenchement (36) pour établir une liaison électrique entre le contact fixe latéral sur lequel l'organe de déclenchement (36) est en permanence en appui de contact par son contour inférieur, et le contact fixe central (40, 150) avec lequel la partie centrale de l'organe de déclenchement (36) vient en contact en position de travail, du type dans lequel le support (100) est surmoulé autour des contacts fixes (148, 150) qui se prolongent longitudinalement à l'extérieur du support isolant (100) pour constituer deux extrémités libres (166, 184) de raccordement du commutateur (30), l'organe d'actionnement (42) comportant une lame de commande (80) déformable élastiquement dont une première extrémité est encastrée dans un couvercle (32) du commutateur et dont la seconde extrémité (84) coopère avec l'organe (36) de déclenchement et comporte un levier d'actionnement (92), réalisé venu de matière avec la lame de commande, qui agit sur la lame de commande (80) et qui est susceptible de pivoter autour d'un axe parallèle au plan de la carte en réponse à un effort d'actionnement qui lui est appliqué par la carte à mémoire électronique, **caractérisé en ce que** le contact fixe latéral (38, 148) et le contact fixe central (40, 150) sont réalisés par découpe dans une même plaque (160) de matériau conducteur de deux bandes longitudinales (38, 40) dont les faces inférieures (164, 175) sont coplanaires, **en ce que** la partie médiane de la bande (40) de contact central qui comporte le contact fixe central ponctuel (150) est cambrée verticalement vers le bas pour décaler verticalement vers le bas le contact fixe central (150) par rapport au contact fixe latéral (148), et **en ce que** les extrémités libres (166, 184) de raccordement sont réalisées par cambrage après le surmoulage du support (100) en matériau isolant.

2. Procédé de fabrication d'un commutateur électrique selon la revendication précédente, **caractérisé en ce que** l'épaisseur des bandes de contact latéral (38) qui comporte le contact fixe latérale allongé (148) et de contact central (40) est égale à 0, 17 mm et **en ce que** le décalage vertical entre les deux contacts, le contact fixe latéral (148) et le contact fixe central (150) est égal à 0, 1 mm.

3. Procédé de fabrication d'un commutateur électrique selon la revendication 2, **caractérisé en ce que** la hauteur entre la face inférieure plane (104) du support isolant (100) et le point haut du contact latéral (148) est égale à 0, 4 mm.

4. Procédé de fabrication d'un commutateur électrique selon l'une quelconque des revendications 2 ou 3, **caractérisé en ce que** la hauteur au repos de l'organe de déclenchement est égale à 0, 2mm.

5. Procédé de fabrication d'un commutateur électrique selon l'une quelconque des revendications 2 à 4, **caractérisé en ce que** l'organe de déclenchement est un dôme en forme de tronc de pyramide à contour rectangulaire dont la plus grande dimension est orientée transversalement par rapport à l'axe longitudinal du commutateur (30).

6. Procédé de fabrication d'un commutateur électrique selon l'une quelconque des revendications 2 à 5, **caractérisé en ce que** la face supérieure du bloc de commutateur (34) comporte une cavité (124) dans laquelle une partie du levier d'actionnement (92) est escamotée en position de travail.

7. Procédé de fabrication d'un commutateur électrique selon la revendication précédente, **caractérisé en ce que** les cavités (114, 124) formées dans la face supérieure (104) du support isolant (100) sont adjacentes et sont ouvertes dans une partie fermée par un film adhésif (126) d'étanchéité.

8. Procédé de fabrication d'un commutateur électrique selon l'une quelconque des revendications 2 à 7, **caractérisé en ce que** le couvercle comporte une paroi supérieure (44) qui délimite une cavité interne comportant partie arrière (64) dans laquelle le bloc de commutateur (32) est fixée par sertissage de plots (68) de fixation qui s'étendent verticalement à travers des trous (70) du support isolant (100), et comportant une partie avant (66) adjacente à la partie arrière (66) dans laquelle un talon (67) d'encastrement de l'extrémité arrière de l'organe d'actionnement (42, 80, 92) est fixé par sertissage de plots (72) qui s'étendent verticalement à travers des trous (73) du talon (67) à partir duquel l'organe d'actionnement (80, 92) s'étend longitudinalement d'arrière en avant au dessus de la face supérieure (102) du bloc de commutateur (34).

9. Procédé de fabrication d'un commutateur électrique selon l'une quelconque des revendications 2 à 8, **caractérisé en ce que** le couvercle (32) est une partie d'un support isolant porte-contacts fixes d'un connecteur électrique pour le raccordement d'une carte à mémoire électronique à un dispositif de lecture/écriture.

10. Procédé de fabrication d'un commutateur électrique selon la revendication précédente, **caractérisé en ce que** les deux extrémités libres de raccordement (166, 184) du commutateur (30) sont parallèles aux extrémités de raccordement (302) des lames de contact (304) du connecteur (300) et sont espacées transversalement d'un pas (p) égal au pas transversal entre les extrémités de raccordement (302) des lames de contact (304), et **en ce que** l'une (184) des extrémités libres de raccordement du commutateur est espacée transversalement d'un pas (p) de l'extrémité de raccordement (302) de la lame de contact adjacente (304).

11. Procédé de fabrication d'un commutateur électrique selon la revendication précédente, **caractérisé en ce que** l'extrémité libre (88) du levier d'actionnement s'étend au dessus de ladite (184) une extrémité libre de raccordement (184) du commutateur, et **en ce que** l'organe d'actionnement (42) est en matériau conducteur et comporte une patte (306) de raccordement qui est alignée avec ladite une extrémité (184) et opposée longitudinalement de manière que l'organe d'actionnement constitue une lame de contact supplémentaire du connecteur (300).
